(19) Europäisches Patentamt
European Patent Office
Office européen des brevets

(11) **EP 4 725 593 A1**

(12) **EUROPEAN PATENT APPLICATION**

(43) Date of publication:
**15.04.2026 Bulletin 2026/16**

(21) Application number: **25207103.0**

(22) Date of filing: **07.10.2025**

(51) International Patent Classification (IPC):
**B01J 19/00** $^{(2006.01)}$    **B01J 19/24** $^{(2006.01)}$
**G01N 25/48** $^{(2006.01)}$

(52) Cooperative Patent Classification (CPC):
**B01J 19/0006; B01J 19/0013; B01J 19/0093;**
**B01J 19/248; B01J 19/249; G01N 25/20;**
B01J 2219/00159; B01J 2219/00813;
B01J 2219/00826; B01J 2219/00831;
B01J 2219/0086; B01J 2219/00862;
B01J 2219/00873; B01J 2219/00954;
B01J 2219/00961;                      (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **09.10.2024 JP 2024176859**

(71) Applicant: **Yokogawa Electric Corporation**
**Musashino-shi, Tokyo 180-8750 (JP)**

(72) Inventors:
• **MANABE, Yuuka**
  **Musashino-shi, Tokyo, 180-8750 (JP)**
• **OGAWA, Jun-Ichi**
  **Musashino-shi, Tokyo, 180-8750 (JP)**
• **NAKAMURA, Ryosuke**
  **Musashino-shi, Tokyo, 180-8750 (JP)**
• **IMAMURA, Yusuke**
  **Musashino-shi, Tokyo, 180-8750 (JP)**

(74) Representative: **Hoffmann Eitle**
**Patent- und Rechtsanwälte PartmbB**
**Arabellastraße 30**
**81925 München (DE)**

(54) **FLOW SYNTHESIZING APPARATUS AND FLOW CHANNEL APPARATUS**

(57)    Provided is a flow synthesizing apparatus comprising: a flow channel through which a fluid flows; and a measuring unit including a plurality of measurement points arranged from an upstream side to a downstream side in a reaction region in which a fluid during a reaction in the flow channel flows, wherein a flow channel portion where the plurality of measurement points are arranged in the reaction region includes a location in which a cross-sectional area of the flow channel becomes greater as the flow channel portion is closer to the downstream side. In the above-described flow synthesizing apparatus, the flow channel may include a pre-reaction region in which a fluid before a reaction flows, and the reaction region may include a location in which a cross-sectional area of the flow channel is smaller than a total cross-sectional area of the flow channel in the pre-reaction region.

FIG.2

(52) Cooperative Patent Classification (CPC): (Cont.)
B01J 2219/00986; B01J 2219/00993;
B01J 2219/00995; B01J 2219/02; B01J 2219/0254;
G01N 25/72

**Description**

BACKGROUND

1. TECHNICAL FIELD

The present invention relates to a flow synthesizing apparatus and a flow channel apparatus.

2. RELATED ART

In Patent document 1, "The flow reactor 10 includes a first pump 11, a liquid-feeding tube 111, a second pump 12, a liquid-feeding tube 112, a mixer 13, and a reaction tube 14" (Patent document 1, paragraph 0027), "The temperature measuring unit 16 has, for example, a plurality of first temperature measuring units 161, second temperature measuring units 162, third temperature measuring units 163, and fourth temperature measuring units 164 that are arranged along the flow channel at the front and back of the mixer 13 such that the temperature of the reaction fluid at a plurality of positions along the reaction tube 14 can be measured." (Patent document 1, paragraph 0030), and "The reaction analysis system 1 measures the temperature before the reaction and the temperatures at a plurality of locations after the reaction, and estimates the reaction parameters based on the measured temperatures." (Patent document 1, paragraph 0031) are described.

RELATED ART DOCUMENTS

Patent document

Patent Document 1: Japanese Patent Application Publication No. 2021-159910

SUMMARY

In a first aspect of the present invention, provided is a flow synthesizing apparatus comprising: a flow channel in which a fluid flows; and a measuring unit including a plurality of measurement points arranged from an upstream side to a downstream side in a reaction region in which a fluid during a reaction in the flow channel flows, wherein a flow channel portion where the plurality of measurement points are arranged in the reaction region includes a location in which a cross-sectional area of the flow channel becomes greater as a measurement point, which is equivalent to one of the plurality of measurement points, is closer to the downstream side.

In the above-described flow synthesizing apparatus, the flow channel may include a pre-reaction region in which a fluid before a reaction flows, and the reaction region may include a location in which a cross-sectional area of the flow channel is smaller than a total cross-sectional area of the flow channel in the pre-reaction region. The pre-reaction region may have a plurality of flow channel portions to be merged at the end portion of the downstream of the pre-reaction region. The flow channel portion in the pre-reaction region may be V-shaped.

In the above-described flow synthesizing apparatus, the measuring unit may measure the temperature of a fluid at each of the plurality of measurement points. The measuring unit may irradiate inspection light to each of the plurality of measurement points, and measure an intensity of the inspection light that has permeated the fluid.

In the above-described flow synthesizing apparatus, the measuring unit may have a plurality of sensors provided at the plurality of measurement points.

In above-described flow synthesizing apparatus, a flow channel portion in which the plurality of measurement points is arranged in the reaction region may have a constant thickness.

In above-described flow synthesizing apparatus, the flow channel may be formed inside a board-shaped flow channel plate.

In above-described flow synthesizing apparatus, distances from an upstream side end of the reaction region to the plurality of measurement points may be different from each other.

In above-described flow synthesizing apparatus, the plurality of measurement points may be arranged on a straight line along a flow direction of the fluid.

In above-described flow synthesizing apparatus, a cross-sectional area of a flow channel portion in the reaction region may gradually change along the flow direction. A width of a flow channel portion in the reaction region may gradually change along the flow direction.

In the second aspect of the present invention, provided is a flow channel apparatus comprising: at least one opening that introduces a fluid; and a flow channel that communicates with the opening and through which the fluid flows, wherein the flow channel includes, in a reaction region in which a fluid during a reaction flows, a location in which a flow channel portion where a measuring unit including a plurality of measurement points being arranged from an upstream side to a downstream side should be arranged makes a flow velocity to decrease as the location is closer to the downstream side.

In above-described flow channel apparatus, a flow channel portion in which the plurality of measurement points should be arranged in the reaction region may have a constant thickness.

In above-described flow channel apparatus, a cross-sectional area of a flow channel portion in the reaction region may gradually change along the flow direction.

The summary clause does not necessarily describe all features of the present invention. In addition, the present invention may also be a sub-combination of the features described above.

BRIEF DESCRIPTION OF THE DRAWINGS

Fig. 1 shows a configuration of a flow synthesizing apparatus 100 according to the present embodiment.

Fig. 2 shows a top view of a flow channel apparatus 200 together with a measuring unit 260.

Fig. 3 shows a cross-sectional view of the flow channel apparatus 200 together with the measuring unit 260.

Fig. 4 shows a configuration of a processing unit 170.

Fig. 5 shows an operational flow of the flow synthesizing apparatus 100.

Fig. 6 shows an example of a computer 1200 in which a plurality of aspects of the present invention may be entirely or partially embodied.

DESCRIPTION OF EXEMPLARY EMBODIMENTS

The present invention will be described below through embodiments of the invention, but the following embodiments do not limit the invention according to the claims. In addition, not all combinations of features described in the embodiments are essential to a solution of the invention.

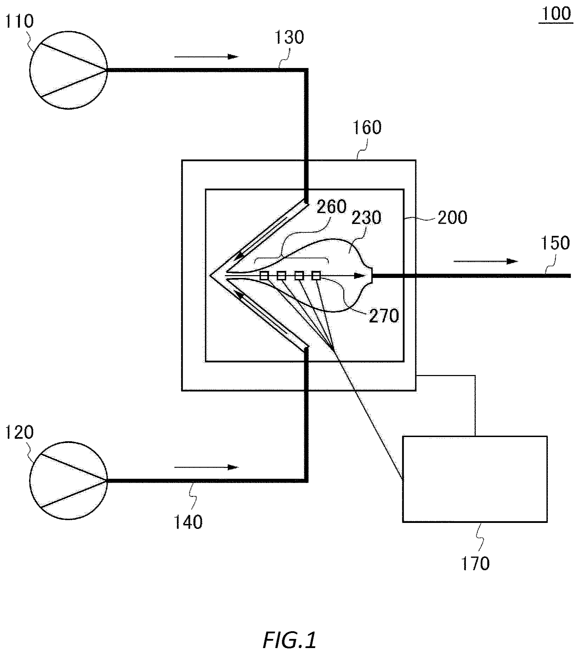

Fig. 1 shows a configuration of a flow synthesizing apparatus 100 according to the present embodiment. The flow synthesizing apparatus 100 is an apparatus that causes a plurality of reactants to react, and measures and analyzes the state of reaction. The flow synthesizing apparatus 100 comprises a first pump 110, a second pump 120, a first liquid-delivery tube 130, a second liquid-delivery tube 140, a discharge pipe 150, a temperature regulator 160, a processing unit 170, a flow channel apparatus 200, and a measuring unit 260.

The first pump 110 is connected to the first liquid-delivery tube 130. The second pump 120 is connected to the second liquid-delivery tube 140. Each of the first pump 110 and the second pump 120 supplies a fluid in which each of a plurality of reactants is contained to the first liquid-delivery tube 130 and the second liquid-delivery tube 140. Herein, the reactant may be a substance that flows into the flow synthesizing apparatus 100 and that changes by chemical reaction or the like inside the flow synthesizing apparatus 100. In the present embodiment, the fluid may be liquid or may be gas. The flow synthesizing apparatus 100 may comprise three or more pumps and supply three or more types of reactants.

Each of the first liquid-delivery tube 130 and the second liquid-delivery tube 140 is a passage through which a fluid in which each of the plurality of reactants is included flows. In the example of the present drawing, the first liquid-delivery tube 130 is a passage through which a fluid including a first reactant flows from an upstream side (a first pump 110 side) to a downstream side (a flow channel apparatus 200 side). The second liquid-delivery tube 140 is a passage through which a fluid including a second reactant flows from an upstream side (a second pump 120 side) to a downstream side (a flow channel apparatus 200 side). Each of the first liquid-delivery tube 130 and the second liquid-delivery tube 140 may be a tube having a fixed shape or may be a flexible tube. Each of the first liquid-delivery tube 130 and the second liquid-delivery tube 140 may have a cross-sectional area that is constant from the upstream to the downstream. Each of the first liquid-delivery tube 130 and the second liquid-delivery tube 140 may have a cross-section that is circular or polygonal. Each of the first liquid-delivery tube 130 and the second liquid-delivery tube 140 may have the same shape. Note that the flow synthesizing apparatus 100 may comprise three or more liquid-feeding tubes.

The flow channel apparatus 200 is connected to the first liquid-delivery tube 130 and the second liquid-delivery tube 140. The flow channel apparatus 200 starts the reaction by mixing the first reactant and the second reactant that flow into from the first liquid-delivery tube 130 and the second liquid-delivery tube 140. The flow channel apparatus 200 advances the reaction while causing a fluid obtained by mixing the first reactant and the second reactant flow to from an upstream side (the first liquid-delivery tube 130 and the second liquid-delivery tube 140 side) to a downstream side (the discharge pipe 150 side). The flow channel apparatus 200 may be connected to three or more liquid-feeding tubes and mix three or more reactants to react. The flow synthesizing apparatus 100 may comprise a plurality of flow channel apparatuses 200 connected in series. In this case, the flow synthesizing apparatus 100 may chain the plurality of reactions to measure and analyze each state of the reaction.

The discharge pipe 150 is connected to the flow channel apparatus 200. The discharge pipe 150 is a passage through which a fluid after the reaction that includes a product obtained by the reaction of the first reactant and the second reactant flows. The fluid that passed through the discharge pipe 150 may be discharged outside the flow synthesizing apparatus 100. When the flow synthesizing apparatus 100 comprises the plurality of flow channel apparatuses 200, the discharge pipe 150 may be connected to the plurality of flow channel apparatuses 200, and the fluid passed through one flow channel apparatus 200 may flow through another flow channel apparatus 200. The discharge pipe 150 may be a tube having a fixed shape or may be a flexible tube. The discharge pipe 150 may have a constant cross-sectional area from the upstream to the downstream. The discharge pipe 150 may have a cross-section that is circular or polygonal.

The temperature regulator 160 adjusts the ambient temperature of the flow channel apparatus 200 to a predetermined temperature. The temperature regulator 160 may be a constant temperature water tank. Inside the temperature regulator 160, the flow channel apparatus 200 may be installed. When the flow synthesizing apparatus 100 comprises a plurality of flow channel apparatuses 200, a plurality of temperature regulators 160 may be included.

The measuring unit 260 measures a state of the fluid that flows through the flow channel apparatus 200. In the example of the present drawing, the measuring unit 260 has a plurality of sensors 270. When the flow synthesizing apparatus 100 comprises a plurality of flow channel apparatuses 200, the same number of measuring units 260 as that of the flow channel apparatuses 200 may be included.

The processing unit 170 is connected to the temperature regulator 160 and the measuring unit 260. The processing unit 170 controls the temperature regulator 160. The processing unit 170 receives measurement results of the plurality of sensors 270 from the measuring unit 260. The processing unit 170 analyzes a reaction based on the received measurement result.

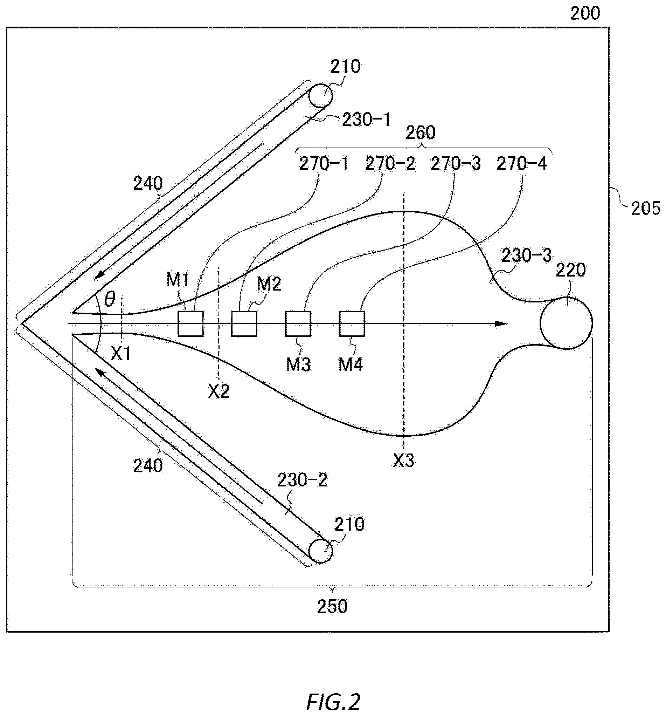

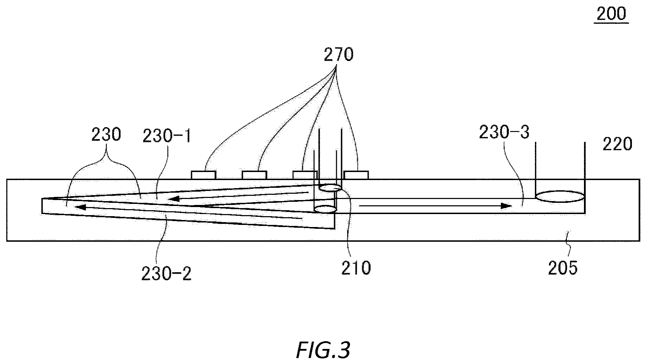

Fig. 2 shows a top view of a flow channel apparatus 200 together with a measuring unit 260. Fig. 3 shows a cross-sectional view of a flow channel apparatus 200 together with a measuring unit 260. In the example of the present drawing, the flow channel apparatus 200 comprises a flow channel plate 205, a plurality of openings 210, a discharge unit 220, and a flow channel 230.

The flow channel plate 205 is a part having formed inside a cavity that is a flow channel, in which deformation hardly occurs. In the present embodiment, the flow channel plate 205 is board-shaped. Alternatively, the flow channel plate 205 may have a columnar shape that is circular or polygonal, or may have a cuboid shape. The flow channel plate 205 may be formed of glass, quartz, or other material with which a reaction hardly occurs with fluids used.

The plurality of openings 210 may be respectively connected to the first liquid-delivery tube 130 and the second liquid-delivery tube 140 in Fig. 1. Each opening 210 introduces a fluid from each liquid-feeding tube to a flow channel 230 inside the flow channel plate 205 in the flow channel apparatus 200. The plurality of openings 210 may have the same shape or may have equivalent size. Alternatively, the plurality of openings 210 may have a cross-sectional area that varies depending on a mixing ratio of the first reactant and the second reactant or the like.

The flow channel 230 is formed inside the flow channel plate 205. The flow channel 230 flows fluids that is to be introduced from the first pump 110 and the second pump 120, merges the fluids to mix them, and flows the mixed fluid to the downstream side. The flow channel 230 includes a flow channel portion 230-1 in which an end portion on the upstream side communicates with an opening 210 of the first liquid-delivery tube 130, a flow channel portion 230-2 in which the end portion on the upstream side communicates with an opening 210 of the second liquid-delivery tube 140, and a flow channel portion 230-3 in which the end portion on the upstream side is connected to end portions on the downstream side of the flow channel portion 230-1 and the flow channel portion 230-2.

The flow channel 230 has a pre-reaction region 240 and a reaction region 250. In the example of the present drawing, the flow channel portion 230-1 and the flow channel portion 230-2 from the flow channel 230 is included in the pre-reaction region 240, and the flow channel portion 230-3 is included in the reaction region 250.

The pre-reaction region 240 is positioned on the upstream side in the flow channel 230. The pre-reaction region 240 is a portion in the flow channel 230, in which a fluid before a reaction flows. The pre-reaction region 240 has a plurality of flow channel portions to be merged at the end portion of the downstream of the pre-reaction region 240. In the example of the present drawing, the pre-reaction region 240 corresponds to a range from end portions on the upstream side of the flow channel portion 230-1 and the flow channel portion 230-2 to a position immediately before a location in which the fluids on the end portions on the downstream side merge. In the example of the present drawing, the flow channel portion of the pre-reaction region 240 is V-shaped. That is, an angle made by the flow channel portion 230-1 and the flow channel portion 230-3 and the angle made by the flow channel portion 230-2 and the flow channel portion 230-3 are acute angles, and an angle θ made by the flow channel portion 230-1 and the flow channel portion 230-2 is less than 180 degree. Alternatively, the flow channel portion in the pre-reaction region 240 may be T-shaped or Y-shaped. That is, the angle θ made by the flow channel portion of the pre-reaction region 240 may be 180 degree or more.

The reaction region 250 is positioned closer to the downstream side than the pre-reaction region 240 in the flow channel 230. The reaction region 250 is a portion in the flow channel 230, in which a fluid during a reaction flows. In the example of the present drawing, the reaction region 250 corresponds to a range from a location at which fluids from the flow channel portion 230-1 and the flow channel portion 230-2 merges to the downstream side of the flow channel portion 230-3. At the upstream end of the reaction region 250, fluids before the reaction that flow into from the flow channel portion 230-1 and the flow channel portion 230-2 merge and mix, and a reaction between the first reactant and the second reactant starts. The flow channel portion 230-3 in which a plurality of measurement points Mk are arranged in the reaction region 250 includes a location in which the cross-sectional area of the flow channel 230 becomes greater as the flow channel portion is closer to the downstream side. Herein, k may be a positive integer, and k = 1, 2, 3, or 4 in the example in the present drawing. In the example of the present drawing, the flow channel portion 230-3 includes a position X3 at which the cross-sectional area of the flow channel 230 is greater than that at the position X2. Herein, the position X3 exists in the downstream side of the position X2. Since the volume of fluid that passes each location per unit time is the same in a series of flow channels, the flow velocity decreases as the cross-sectional area of the flow channel 230 of the location becomes greater. Accordingly, the flow velocity at the position X3 at which the cross-sectional area of the flow channel 230 is greater decreases to be smaller than the flow velocity at the position X2 at which the cross-sectional area of the flow channel 230 is smaller. In this manner, the flow channel 230 may include, in the reaction region 250, a location in which the flow channel portion 230-3 where the measuring unit 260 should be arranged makes the flow velocity decrease as the flow channel portion is closer to the downstream side.

The reaction region 250 may include a location at which a cross-sectional area of the flow channel 230 is smaller than the total cross-sectional area of the flow channel 230 in pre-reaction region 240. According to such a flow synthesizing apparatus 100, the plurality of reactants that flow into the reaction region 250 easily mix. The reaction region 250 may include the location near the upstream end, at which the cross-sectional area of the flow channel 230 is smaller than the total cross-sectional area of the flow channel 230 in the pre-reaction region 240. In the example of the present drawing, the reaction region 250 includes a position X1 at which the cross-sectional area of the flow channel 230 is smaller than the total cross-sectional area of the flow channel portion 230-1 and the flow channel portion 230-2 in the pre-reaction region 240.

The flow channel portion 230-3 at which the plurality of measurement points Mk are arranged in the reaction region 250 or at which the plurality of measurement points Mk should be arranged may have a constant thickness. According to such a flow synthesizing apparatus 100, the occurrence of convection inside the flow channel 230 can be prevented, and the reaction in the reaction region 250 can be accurately measured. The flow channel portion where the plurality of measurement points M1, M2, M3, and M4 are arranged in the reaction region 250 may have a thickness smaller than the width. The flow channel portion where the plurality of measurement points Mk are arranged in the reaction region 250 may have a width of 0.1 $\mu$m to tens of centimeters.

The cross-sectional area of the flow channel portion 230-3 in the reaction region 250 may change gradually along a flowing direction. In the example of the present drawing, the width of the flow channel portion 230-3 gradually increases from the position X1 to X3, and the width gradually decreases from the position X3 to the discharge unit 220. According to such a flow synthesizing apparatus 100, the occurrence of convection inside the flow channel 230 can be prevented, and the reaction in the reaction region 250 can be accurately measured. In the example of the present drawing, the cross-sectional area of the flow channel portion of the reaction region 250 gradually decreases after gradually increasing to a specific value. Alternatively, the cross-sectional area of the flow channel portion in the reaction region 250 may continue to increase gradually as being closer to the downstream side, and may be a specific cross-sectional area after the cross-sectional area has gradually increased to a specific value. The flow channel portion in the reaction region 250 may have a shape in which its inner wall surface makes a streamline shape in a top view.

The discharge unit 220 may be connected to the discharge pipe 150 in Fig. 1. The discharge unit 220 is an outlet through which the fluid after the measurement is discharged from the flow channel apparatus 200. The discharge unit 220 may have the same shape as at least one of the openings 210, or may have an equivalent size. The discharge unit 220 may have a different shape or different size from the opening 210. The discharge unit 220 may, for example, have the same cross-sectional area as the total of the cross-sectional areas of the flow channel portion 230-1 and the flow channel portion 230-2 in order to ensure that the product is discharge at approximately the same flow velocity as the inlet velocity of the first reactant that flows into the flow channel portion 230-1 and the second reactant that flows into the flow channel portion 230-2.

The measuring unit 260 has a plurality of measurement points Mk. The measuring unit 260 may have any other number of measurement points Mk. The plurality of measurement points Mk are arranged from the upstream side to the downstream side. Distances from an upstream side end of the reaction region 250 to the plurality of measurement points Mk may be different from each other. By having such Mk, the measuring unit 260 can measure the state of the fluid after a different time has elapsed from the start of the reaction. The plurality of measurement points Mk may be arranged on a straight line along a flow direction of the fluid. By having such Mk, the measuring unit 260 can measure the state of the fluid without being affected by convection. Alternatively, the plurality of measurement points Mk may be arranged at a position deviated from the straight line along the flow direction of the fluid. For example, the plurality of measurement points Mk may be arranged so as to be distributed in a two-dimensional manner corresponding to a spread of the flow channel 230 when the flow channel 230 has a shape that is spread in a flattened manner. The plurality of measurement points Mk may be arranged to be inclined, meandering, or in any other form relative to the straight line along the flow direction of the fluid. The plurality of measurement points Mk may be arranged at equal intervals in the flow direction or may be respectively arranged with different intervals.

The measuring unit 260 has a plurality of sensors 270 provided at the plurality of measurement points Mk. In the example of the present drawing, the measuring unit 260 has a first sensor 270-1, a second sensor 270-2, a third sensor 270-3, and a fourth sensor 270-4 as the sensor 270. The plurality of sensors 270 may be provided at the plurality of measurement points Mk. The sensor 270 may be provided on an upper surface of the flow channel plate 205. At least part of the sensor 270 may be provided in the wall surface that is an inner wall of the flow channel 230. The sensor 270 may be directly in contact with the fluid, or may be in contact with the fluid via the wall surface of the flow channel plate 205 or the like. The sensor 270 may be at least one of a heat flux meter, a thermocouple, or a thermographic camera. That is, the measuring unit 260 may measure the temperature of the fluid at each of the plurality of measurement points Mk. When the sensor 270 is a thermographic camera, the measuring unit 260 may acquire an image showing a temperature distribution in a region including the plurality of measurement points Mk. Alternatively, the sensor 270 may be a pressure gauge. The sensor 270 may be a light detector. In this case, the measuring unit 260 may irradiate inspection light to each of the plurality of measurement points Mk, and measure an intensity of the inspection light that has permeated the fluid. The interval between the plurality of measurement points Mk may be greater than the size of the sensor 270.

According to the flow synthesizing apparatus 100 described above, the flow channel portion at which the plurality of measurement points Mk are arranged in the reaction region 250 includes a location in which the cross-sectional area of the flow channel 230 becomes greater as the flow channel portion is closer to the downstream side. Thereby, the flow synthesizing apparatus 100 increases a distance over which the fluid flows per unit time (That is, a flow velocity) by relatively reducing the cross-sectional area of the flow channel 230 at a location in which the temperature distribution vigorously changes at an early time of reaction start. Thereby, even if the measurement points Mk are arranged to be spaced apart with intervals that is required for arranging the sensor 270 at such a location, the flow synthesizing apparatus 100 can perform the measurement with high precision by arranging the measurement points Mk densely relative to the elapsed time from the reaction start.

Meanwhile, by relatively increasing the cross-sectional area of the flow channel 230 at a location on the downstream side in which the change of the temperature distribution is relatively gradual after the time elapsed from the reaction start, the flow synthesizing apparatus 100 can perform the measurement with a required precision even if the measurement points Mk are arranged relatively sparsely relative to the elapsed time from the reaction start. In addition, the flow synthesizing apparatus 100 can prevent liquid leakage, breakage of the flow channel 230 and the like due to occlusion and increasing pressure loss on the downstream side of such a flow channel 230, or alternatively can prevent the flow channel 230 from being excessively long. According to the flow channel apparatus 200 described above, in the reaction region 250, due to the flow channel portion where the measuring unit 260 should be arranged including a location in which the flow velocity decreases as the location is closer to the downstream side, the measurement can be performed with a high precision by arranging the measurement points densely relative to the reaction time at a location in which the temperature distribution vigorously changes, as well as the flow channel can be prevented from being excessively long.

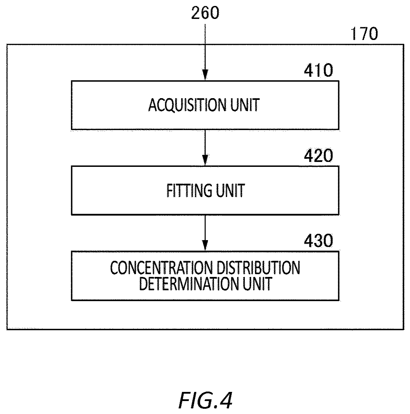

Fig. 4 shows a configuration of a processing unit 170. The processing unit 170 may be a computer such as PC (personal computer), tablet computer, smartphone, workstation, server computer, or general purpose computer, or may be a computer system to which a plurality of computers are connected. Such a computer system is also a computer in a broad sense. Also, the processing unit 170 may be implemented by one or more executable virtual computer environments inside the computer. Alternatively, the processing unit 170 may be a special purpose computer designed for the flow synthesizing apparatus 100, or may be a special purpose hardware realized by dedicated circuit. In the example of the present drawing, the processing unit 170 has an acquisition unit 410, a fitting unit 420, and a concentration distribution determination unit 430.

The acquisition unit 410 is connected to the measuring unit 260. The acquisition unit 410 acquires a measurement value from the measuring unit 260. The acquisition unit 410 may have a receiving circuit that receives measurement data from the measuring unit 260 or each sensor 270, or may have an AD converter that samples analog measurement value output from each sensor 270 and converts the data from analog to digital.

The fitting unit 420 is connected to the acquisition unit 410. The fitting unit 420 determines a reaction parameter used for an equation by fitting the equation that shows a theoretical value of a reaction state to the actual reaction based on the measurement value acquired by the acquisition unit 410.

The concentration distribution determination unit 430 is connected to the fitting unit 420. The concentration distribution determination unit 430 acquires the reaction parameter from the fitting unit 420. The concentration distribution determination unit 430 determines the concentration distribution of the reaction performed in the flow synthesizing apparatus 100 based on the acquired reaction parameter.

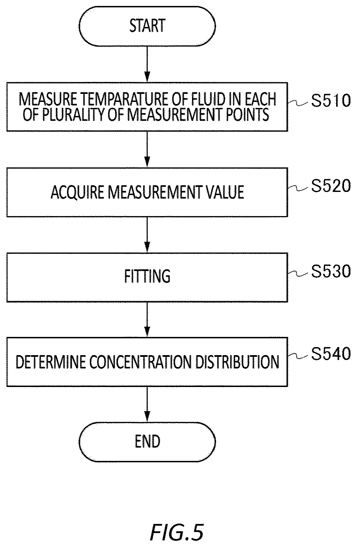

Fig. 5 shows an operational flow of the flow synthesizing apparatus 100. In response to the reaction performed in the reaction region 250 of the flow channel apparatus 200 reaching a steady state, the flow synthesizing apparatus 100 starts a flow of the present drawing. In step 510 (S510), the measuring unit 260 measures a state of a fluid in a plurality of measurement points.

In S520, the acquisition unit 410 acquires the measurement value of the fluid in the plurality of measurement points Mk from the measuring unit 260. The acquisition unit 410 may acquire the temperature of the fluid in the plurality of measurement points Mk. The acquisition unit 410 may acquire an inspection light intensity or pressure of the plurality of measurement points Mk. The acquisition unit 410 may acquire an ambient temperature of the flow channel apparatus 200 from the temperature regulator 160.

In S530, the fitting unit 420 determines a reaction parameter by fitting the equation that shows the reaction state to the actual measurement value. The fitting unit 420 may determine the reaction parameter by fitting a function $T(x)$ that represents the temperature at the position x in the flow channel 230 and that is theoretically derived according to the shape of the flow channel 230 or the flow velocity of the fluid during the reaction to a distribution of the measured temperature of the fluid, that is, for example, a set of temperature of the fluid at each position x of the plurality of measurement points. Herein, x shows a reaction start point, that is, a distance from the upstream end of the reaction region 250. x may be represented by a function of time t that has elapsed from passing the reaction start point. The fitting unit 420 may determine the reaction parameter such that an error between an estimated value of the temperature of the fluid at each position obtained by the function $T(x)$ and a measurement value obtained by the measuring unit 260 at each measurement point is in a range of a predetermined value. The fitting unit 420 may calculate the error between the estimated value of the plurality of temperatures and the measurement value of the plurality of temperatures by using Mean Square Error (MSE) or any other method, for example. Herein, the function $T(x)$ may be a function of the position x, a reaction parameter $\Delta H$ and $\Delta G^{\ddagger}$ as shown in the following Expression (1).

$$T\left(x\right) \approx f\left(x, \Delta H, \Delta G^{\ddagger}\right) \qquad \cdot \cdot \cdot (1)$$

Alternatively, the function $T(x)$ may be a function of the position x, a reaction parameter $\Delta H$ and $E_a$ as shown in the following Expression (2).

$$T\left(x\right) \approx f\left(x, \Delta H, E_a\right) \qquad \cdot \cdot \cdot (2)$$

In Expression (1) and Expression (2), the reaction parameter $\Delta H$ shows an enthalpy of reaction (kJ/mol). The reaction parameter $\Delta G^{\ddagger}$ shows an activation free energy (kJ/mol). The reaction parameter $E_a$ shows an activation energy (kJ/mol). Hereinafter, an example in a case of calculating the function $T(x)$ in a form of Expression (1) is described.

Herein, the function $T(x)$ is derived from an energy conservation equation in a steady state. Assuming that physical properties of solution such as density, specific heat, or heat transfer rate is constant before and after the reaction, and assuming that the ambient temperature of the flow channel apparatus 200 is uniform and constant, the temperature change at any position x in the flow channel is represented by the following Expression (3).

$$\rho c_p \Delta V u \frac{\mathrm{d}T(x)}{\mathrm{d}x} = \dot{q}(x)\Delta V - U\Delta A(T - T_{\mathrm{B}}) \quad \cdot \cdot \cdot (3)$$

In Expression (3), $\rho$, $c_p$, and u respectively show the density, the specific heat capacity, and the flow velocity of the solution. U shows an overall heat transfer coefficient. $\Delta A$ shows a heat transfer area of a unit volume $\Delta V$. $T_{\mathrm{B}}$ shows the ambient temperature of the flow channel apparatus 200. The enthalpy of reaction at the position x is represented by the following Expression (4).

$$\dot{q}(x) = -\Delta H \frac{\mathrm{d}[P]}{\mathrm{d}t} \quad \cdot \cdot \cdot (4)$$

In Expression (4), [P] indicates a molar concentration of a product, and d[P]/dt shows a reaction rate. When a target reaction is a secondary reaction, and a cross-sectional area and a shape of the flow channel in the reaction region 250 is constant, the function $T(x)$ is represented by the following Expression (5).

$$T(x) = T_B + (T_{\text{inlet}} - T_B)e^{-ax}$$

$$- \frac{1}{\rho c_p u} e^{-ax} \int_0^x e^{ax} \Delta H \frac{k_B T}{h} [A][B] \exp\left(-\frac{\Delta G^{\ddagger}}{RT}\right) dx \quad \cdot \cdot \cdot \quad (5)$$

In Expression (5), $k_B$, R, and h respectively show a Boltzmann constant, a gas constant, and a Planck constant. [A] shows a molar concentration of a reactant A, and [B] shows a molar concentration of a reactant B. $T_{\text{inlet}}$ shows a temperature of a fluid in a reaction start point (x = 0). When enough heat exchange is performed before the reaction, it can be considered that $T_{\text{inlet}} = T_B$. When the flow channel has a cross-section with a constant circular shape, a can be represented as a = $4U/\rho c_p d_h u$ by using the diameter $d_h$ of the flow channel.

In the present embodiment, the cross-sectional area of the flow channel 230 changes along the flow direction in the reaction region 250. Accordingly, each of $\Delta V$, $\Delta A$, and u of the above-described Expression (3) is a function of the position x. Provided that, due to the shape of the flow channel 230, an expression of the function T(x) like Expression (5) can be derived according to a deformation of the expression even if the cross-sectional area changes, the fitting unit 420 may use such a function T(x). Alternatively, using Expression (3) as a difference equation, the expression $T(x_k)$ of the temperature at the position $x_k$ of each measurement point Mk may be obtained in advance, from Expression (3), by calculating and integrating $\Delta T(x)/\Delta x$ for each infinitesimal interval $\Delta x$ from x = 0 to a position of a measurement point of the most downstream. The expression $T(x_k)$ of the temperature of each position $x_k$ obtained in this manner shall include the reaction parameter $\Delta H$ and $\Delta G^{\ddagger}$. The fitting unit 420 may estimate the reaction parameter $\Delta H$ and $\Delta G^{\ddagger}$ by fitting the expression $T(x_k)$ of the temperature of each position $x_k$ obtained in this manner in advance to the measurement value of each position $x_k$.

In S540, the concentration distribution determination unit 430 acquires the reaction parameter from the fitting unit 420. The concentration distribution determination unit 430 determines the concentration distribution P(x) of the product and the reactant based on the reaction parameter. When the reaction parameter determined in S530 is $\Delta H$ and $\Delta G^{\ddagger}$, the concentration distribution determination unit 430 obtains by solving the following differential equation.

$$\frac{d[P]}{dt} = \frac{k_B T}{h} [A][B] \exp\left(-\frac{\Delta G^{\ddagger}}{RT}\right) \quad \cdot \cdot \cdot \quad (6)$$

When the reaction parameter determined in S530 is $\Delta H$ and $E_a$, the concentration distribution determination unit 430 obtains by solving the following differential equation.

$$\frac{d[P]}{dt} = [A][B] A \exp\left(-\frac{E_a}{RT}\right) \quad \cdot \cdot \cdot \quad (7)$$

In the above-described expression, A indicates a frequency factor in the Arrhenius equation.

Various embodiments of the present invention may be described with reference to flowcharts and block diagrams, where blocks may represent (1) stages of processes in which operations are executed or (2) sections of apparatuses responsible for executing operations. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instruction may be provided for a processor or programmable circuit of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer, or PC, a tablet computer, a smartphone, a workstation, a server computer, a general purpose computer, a special purpose computer, or the like, or may be a computer system to which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processors is responsible for executing may be determined statically by multiprocessor-aware programming.

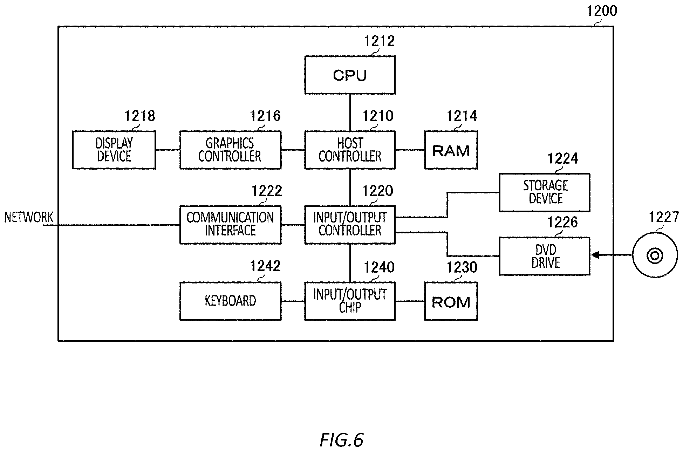

Fig. 6 shows an example of a computer 1200 in which a plurality of aspects of the present invention may be entirely or partially embodied. A program that is installed in the computer 1200 may cause the computer 1200 to function as operations associated with a device according to the embodiment of the present invention or one or more sections in the device, or may cause the computer 1200 to execute the operation or the one or more sections, and/or may cause the computer 1200 to execute processes according to the embodiment of the present invention or stages of the processes. Such a program may be executed by a CPU 1212 in order to cause the computer 1200 to execute particular operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes a communication interface 1222, a storage device 1224 such as a hard disk, input/output units such as a DVD-ROM drive 1226 and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display device 1218.

The communication interface 1222 communicates with other electronic devices via a network. The storage device 1224 stores a program and data used by the CPU 1212 in the computer 1200. The DVD-ROM drive 1226 reads a program or data from a DVD-ROM 1227 and provides the program or data to the storage device 1224 via the RAM 1214. The IC card drive reads the programs and the data from the IC card, and/or writes the programs and the data to the IC card.

The ROM 1230 stores therein a boot program or the like that is executed by the computer 1200 at the time of activation, and/or a program which depends on the hardware of the computer 1200. The input/output chip 1240 may also connect various input/output units to the input/output controller 1220 via a parallel port, a serial port, a keyboard port, a mouse port, or the like.

Programs are provided by a computer-readable medium such as the DVD-ROM 1227 or the IC card. The programs are read from the computer-readable medium, are installed in the storage device 1224, the RAM 1214, or the ROM 1230, which are also an example of the computer-readable medium, and are executed by the CPU 1212. Information processing written in these programs is read by the computer 1200, and provides cooperation between the programs and the various types of hardware resources described above. A device or method may be constructed by realizing the operation or processing of information according to the use of the computer 1200.

For example, when communication is executed between the computer 1200 and an external device, the CPU 1212 may execute a communication program loaded onto the RAM 1214 to instruct communication processing to the communication interface 1222, based on the processing described in the communication program. Under the control of the CPU 1212, the communication interface 1222 reads transmission data stored in a transmission buffer processing region provided in a recording medium such as the RAM 1214, the storage device 1224, the DVD-ROM 1227, or the IC card, transmits the read transmission data to the network, or writes reception data received from the network in a reception buffer processing region or the like provided on the recording medium.

In addition, the CPU 1212 may cause the RAM 1214 to read all or a necessary portion of a file or database stored in an external recording medium such as the storage device 1224, the DVD-ROM drive 1226, or the DVD-ROM 1227, the IC card, or the like, and may execute various types of processes on data on the RAM 1214. The CPU 1212 may then write back the processed data to the external recording medium.

Various types of information such as various types of programs, data, tables, and databases may be stored in a recording medium and subjected to information processing. The CPU 1212 may execute various types of processing on the data read from the RAM 1214, which includes various types of operations, information processing, conditional judging, conditional branch, unconditional branch, search/replace of information, or the like, as described throughout this disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute satisfying a predetermined condition.

The above-described program or software module may be stored in the computer-readable medium on the computer 1200 or near the computer 1200. In addition, a recording medium such as a hard disk or a RAM provided in a server system connected to a dedicated communication network or the Internet may be used as the computer-readable medium, thereby providing the program to the computer 1200 via the network.

While the present invention has been described above by way of the embodiments, the technical scope of the present invention is not limited to the scope described in the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operational flow is described by using phrases such as "first" or "next" for the sake of convenience in the claims, specification, and drawings, it does not necessarily mean that the process must be performed in this order.

EXPLANATION OF REFERENCES

    100: flow synthesizing apparatus;
    110: first pump;
    120: second pump;
    130: first liquid-delivery tube;
    140: second liquid-delivery tube;
    150: discharge pipe;
    160: temperature regulator;
    170: processing unit;
    200: flow channel apparatus;
    205: flow channel plate;
    210: opening;
    220: discharge unit;
    230: flow channel;
    230-1: flow channel portion;
    230-2: flow channel portion;
    230-3: flow channel portion;

240: pre-reaction region;
250: reaction region;
260: measuring unit;
270: sensor;
270-1: first sensor;
270-2: second sensor;
270-3: third sensor;
270-4: fourth sensor;
410: acquisition unit;
420: fitting unit;
430: concentration distribution determination unit;
X1, X2, X3: position;
M1, M2, M3, M4: measurement point;
1200: computer;
1210: host controller;
1212: CPU;
1214: RAM;
1216: graphics controller;
1218: display device;
1220: input/output controller;
1222: communication interface;
1224: storage device;
1226: DVD-ROM drive;
1227: DVD-ROM;
1230: ROM;
1240: input/output chip; and
1242: keyboard.

## Claims

1. A flow synthesizing apparatus comprising:

   a flow channel through which a fluid flows; and
   a measuring unit including a plurality of measurement points arranged from an upstream side to a downstream side in a reaction region in which a fluid during a reaction in the flow channel flows, wherein
   a flow channel portion where the plurality of measurement points are arranged in the reaction region includes a location in which a cross-sectional area of the flow channel becomes greater as the flow channel portion is closer to the downstream side.

2. The flow synthesizing apparatus according to claim 1, wherein the flow channel includes a pre-reaction region in which a fluid before a reaction flows; and
   the reaction region includes a location at which the cross-sectional area of the flow channel is smaller than a total cross-sectional area of the flow channel in the pre-reaction region.

3. The flow synthesizing apparatus according to claim 1 or 2, wherein the measuring unit measures a temperature of a fluid at each of the plurality of measurement points.

4. The flow synthesizing apparatus according to any one of claims 1 to 3, wherein the measuring unit has a plurality of sensors provided at the plurality of measurement points.

5. The flow synthesizing apparatus according to any one of claims 1 to 4, wherein the flow channel portion where the plurality of measurement points are arranged in the reaction region has a constant thickness.

6. The flow synthesizing apparatus according to claim 4, wherein the flow channel is formed inside a board-shaped flow channel plate.

7. The flow synthesizing apparatus according to any one of claims 1 to 6, wherein distances from an upstream side end of the reaction region to the plurality of measurement points are different from each other.

8. The flow synthesizing apparatus according to claim 7, wherein the plurality of measurement points are arranged on a straight line along a flow direction of the fluid.

9. The flow synthesizing apparatus according to any one of claims 1 to 8, wherein the cross-sectional area of the flow channel portion of the reaction region gradually changes along the flow direction.

10. A flow channel apparatus comprising:

   at least one opening that introduces a fluid; and
   a flow channel that communicates with the opening and through which the fluid flows, wherein
   the flow channel includes, in a reaction region in which a fluid during a reaction flows, a location in which a flow channel portion where a measuring unit including a plurality of measurement points being arranged from an upstream side to a downstream side should be arranged causes a flow velocity to decrease as the flow channel portion is closer to the downstream side.

11. The flow channel apparatus according to claim 10, wherein the flow channel portion where the plurality of measurement points should be arranged in the reaction region has a constant thickness.

12. The flow channel apparatus according to claim 10 or 11, wherein a cross-sectional area of the flow channel portion of the reaction region gradually changes along the flow direction.

*FIG.1*

*FIG.2*

FIG.3

260

170

410

ACQUISITION UNIT

420

FITTING UNIT

430

CONCENTRATION DISTRIBUTION
DETERMINATION UNIT

*FIG.4*

```
          ┌──────────────┐
          │    START     │
          └──────────────┘
                 │
                 ▼
  ┌─────────────────────────────────────┐
  │ MEASURE TEMPARATURE OF FLUID IN EACH │ ── S510
  │  OF PLURALITY OF MEASUREMENT POINTS  │
  └─────────────────────────────────────┘
                 │
                 ▼
  ┌─────────────────────────────────────┐
  │       ACQUIRE MEASUREMENT VALUE      │ ── S520
  └─────────────────────────────────────┘
                 │
                 ▼
  ┌─────────────────────────────────────┐
  │               FITTING               │ ── S530
  └─────────────────────────────────────┘
                 │
                 ▼
  ┌─────────────────────────────────────┐
  │   DETERMINE CONCENTRATION DISTRIBUTION │ ── S540
  └─────────────────────────────────────┘
                 │
                 ▼
          ┌──────────────┐
          │     END      │
          └──────────────┘
```

*FIG.5*

*FIG.6*

Europäisches
Patentamt

European
Patent Office

Office européen
des brevets

## EUROPEAN SEARCH REPORT

**Application Number**

EP 25 20 7103

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 889 593 A1 (YOKOGAWA ELECTRIC CORP [JP]) 6 October 2021 (2021-10-06) | 10-12 | INV.<br>B01J19/00 |
| Y | * paragraphs [0032] - [0050], [0106] - [0110], [0124]; figures 1,4-9,13,15 * | 1-12 | B01J19/24<br>G01N25/48 |
| | ----- | | |
| X | US 2023/375585 A1 (MANABE YUUKA [JP] ET AL) 23 November 2023 (2023-11-23) | 10-12 | |
| Y | * paragraphs [0028] - [0034], [0075], [0076]; figures 4-5 * | 1-12 | |
| | ----- | | |
| Y | US 2009/142846 A1 (CRENSHAW HUGH C [US] ET AL) 4 June 2009 (2009-06-04)<br>* paragraphs [0124], [0157] - [0161]; figure 16 * | 1-12 | |
| | ----- | | |
| Y | US 2005/272144 A1 (SANDO YASUHIRO [JP] ET AL) 8 December 2005 (2005-12-08)<br>* figure 3 * | 1,2,9,12 | |
| | ----- | | |
| Y | US 2005/161326 A1 (MORITA TOMOYUKI [JP] ET AL) 28 July 2005 (2005-07-28)<br>* figures 33,34a-34b * | 1,2,9,12 | **TECHNICAL FIELDS SEARCHED (IPC)**<br><br>B01J |
| | ----- | | |

The present search report has been drawn up for all claims

| Place of search | Date of completion of the search | Examiner |
|---|---|---|
| Munich | 5 February 2026 | Kurtulan Dogan, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 7103

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2026

| Patent document cited in search report | | | Publication date | Patent family member(s) | | | Publication date |
|---|---|---|---|---|---|---|---|
| EP | 3889593 | A1 | 06-10-2021 | EP | 3889593 | A1 | 06-10-2021 |
| | | | | US | 2021299628 | A1 | 30-09-2021 |
| US | 2023375585 | A1 | 23-11-2023 | CN | 117129517 | A | 28-11-2023 |
| | | | | EP | 4279174 | A1 | 22-11-2023 |
| | | | | JP | 2023171124 | A | 01-12-2023 |
| | | | | US | 2023375585 | A1 | 23-11-2023 |
| US | 2009142846 | A1 | 04-06-2009 | EP | 1945793 | A2 | 23-07-2008 |
| | | | | US | 2009142846 | A1 | 04-06-2009 |
| | | | | WO | 2007021820 | A2 | 22-02-2007 |
| US | 2005272144 | A1 | 08-12-2005 | CN | 1965074 | A | 16-05-2007 |
| | | | | EP | 1754782 | A1 | 21-02-2007 |
| | | | | JP | WO2005121308 | A1 | 10-04-2008 |
| | | | | US | 2005272144 | A1 | 08-12-2005 |
| | | | | WO | 2005121308 | A1 | 22-12-2005 |
| US | 2005161326 | A1 | 28-07-2005 | DE | 112004002254 | T5 | 16-08-2007 |
| | | | | JP | WO2005049196 | A1 | 27-12-2007 |
| | | | | KR | 20060105787 | A | 11-10-2006 |
| | | | | TW | 200536601 | A | 16-11-2005 |
| | | | | TW | 200702660 | A | 16-01-2007 |
| | | | | US | 2005161326 | A1 | 28-07-2005 |
| | | | | WO | 2005049196 | A1 | 02-06-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021159910 A